# EUROPEAN PATENT APPLICATION

(11) **EP 3 944 040 A1**
(43) Date of publication of application: **26.01.2022**
(21) Application number: 21179917.6
(22) Date of filing: 17.06.2021
(51) Int. Cl.: G05B 19/418

(54) **PROCESS MODEL CREATION SYSTEM, AND PROCESS MODEL CREATION METHOD**

(30) Priority: 21.07.2020 JP 2020124199
(71) Applicant: Hitachi, Ltd., Tokyo 100-8280 (JP)
(72) Inventor: Hagiwara, Takehiro, Tokyo, 1008280 (JP); Ishida, Hitoshi, Tokyo, 1008280 (JP); Miyamoto, Hiroki, Tokyo, 1008280 (JP)
(74) Representative: Manitz Finsterwald Patent- und Rechtsanwaltspartnerschaft mbB

(57) **Abstract**

A process model is created from site data generated in a process.

A process model creation system includes: a site data acquiring section that acquires, as site data, task information related to one or more tasks implemented for a process including the tasks, and task-related information related to the implemented tasks; an instance creating section that creates a step instance by associating the task-related information with the corresponding task information; and a process model creating section that creates, from one or more step instances, a process model which is a model representing a relationship between the one or more tasks in the process.

## Description

### BACKGROUND

The present invention relates to a process model creation system, and a process model creation method.

In the manufacturing industry, manufacturing processes generally include a plurality of steps, and each step includes a plurality of tasks. In each task, completion of a task, or an occurrence of a predetermined event triggers an occurrence, and collection of site data. A site operator analyzes this site data to thereby attempt to enhance the work efficiency.

Here, in a case that different departments manage different tasks or steps, it becomes difficult to share information between the departments. One of the possible reasons is that the different departments are using different systems for managing the tasks.

In addition, while each department attempts to enhance the work efficiency of tasks in the department by analyzing site data collected within the department, cooperation between the departments is essential for an enhancement of the work efficiency of the whole manufacturing process. For this purpose, it is considered that cooperation between the departments is promoted by presenting site data that is generated not only in individual departments, but in the whole manufacturing process in association with each other.

This problem is not characteristic of manufacturing sites, but the same applies also to industry types having a series of processes including a plurality of tasks such as the logistics industry, retail business or service industry, for example.

Japanese Unexamined Patent Application Publication No. 2019-153051 discloses an information collection system. The information collection system "includes: a relation data accumulating section that stores relation data defining the relation of each of a plurality of pieces of information included in site data; a relation data search section that searches for second information related to first information included in the plurality of pieces of information on the basis of the relation data stored on the relation data accumulating section; and a user interface section that displays connection relationships between the plurality of pieces of information associated by the relation data, and, in accordance with selection of the first information in the connection relationships between the plurality of pieces of information displayed on the user interface section, the relation data search section searches for the second information related to the first information on the basis of the relation data, and displays the first information, and the second information on the user interface section along with the connection relationships between the plurality of pieces of information."

WO07/132547 discloses a task model generation program. The task model generation program "creates flow information in which names of updated data sets are sorted in the order of update times every time a data update process is performed, and counts the numbers of times of appearance of the same flow information," and "determines a task flow that is in task flows represented by the flow information, and whose number of times of appearance is large as a typical task flow, and determines the rest as exceptional task flows."

Japanese Unexamined Patent Application Publication No. 2010-067047 discloses a feature extraction method. In the feature extraction method, "for each of child logs including start times, and end times of processes, a parent log including a start time, and an end time that covers start times to end times included in the child log is identified."

### SUMMARY

Japanese Unexamined Patent Application Publication No. 2019-153051 disclosing the information collection system proposes to manage information about a manufacturing process by using relation data defining the relation of each of a plurality of pieces of information included in site data generated from tasks included in the manufacturing process, but does not mention a technique to create a process model of a process that covers a plurality of tasks, and a plurality of steps.

In the task model generation program disclosed in WO07/132547, a task flow about a particular process is generated, but WO07/132547 does not mention a technique to create a process model that manages the relation of steps. In addition, WO07/132547 does not mention association of information related to the implementation of tasks that are included in site data in some cases, either.

The feature extraction method disclosed in Japanese Unexamined Patent Application Publication No. 2010-067047 can determine tasks associated with information related to the implementation of tasks included in site data, but Japanese Unexamined Patent Application Publication No. 2010-067047 does not mention a technique to create a task flow.

Accordingly, a technology for creating a process model that defines the relation of site data generated in processes is desired.

The present invention has been made in view of the circumstance described above, and one of objects thereof is to provide a process model creation system, and a process model creation method that enable creation of a process model which is a process relation data model.

The present invention discloses, as one aspect thereof, a process model creation system including: a site data acquiring section that acquires, as site data, task information related to one or more tasks implemented for a process including the tasks, and task-related information related to the implemented tasks; an instance creating section that creates a step instance by associating the task-related information with the corresponding task information; and a process model creating section that creates, from one or more step instances, a process model which is a model representing a relationship between the one or more tasks in the process.

In addition, the present invention discloses, as one aspect thereof, a process model creation system including: a site data accumulating apparatus that accumulates, as site data, task information related to one or more tasks implemented for a process including the tasks, and task-related information related to the implemented tasks; a process model creating apparatus that acquires the site data from the site data accumulating apparatus, creates a step instance by associating the task-related information with the corresponding task information, and creates, from one or more step instances, a process model which is a model representing a relationship between the one or more tasks in the process; and a model accumulating apparatus that accumulates the process model created by the process model creating apparatus.

In addition, the present invention discloses, as one aspect thereof, a process model creation method including: a site data acquisition step of acquiring, as site data, task information related to one or more tasks implemented for a process including the tasks, and task-related information related to the implemented tasks; an instance creation step of creating a step instance by associating the task-related information with the corresponding task information; and a process model creation step of creating, from one or more step instances, a process model which is a model representing a relationship between the one or more tasks in the process.

According to the present invention, it is possible to create a process model from site data related to processes.

### BRIEF DESCRIPTION OF THE DRAWINGS

FIG. 1 is a block diagram depicting a configuration example of a network to which a process model creation system according to a first embodiment is applied.
FIG. 2 is a block diagram depicting a functional-configuration example of the process model creation system in FIG. 1.
FIG. 3 is a figure depicting an example of an operation procedure performed by the process model creation system in FIG. 1 from creation of a process model until registration of the process model on a relation data model accumulating section.
FIG. 4 is a figure depicting a specific example of a screen display of the created process model.
FIG. 5 is a figure depicting an example of site data generated by a data generating apparatus in FIG. 1.
FIG. 6 is a figure depicting an example of relationships between tasks, steps, and a process.
FIG. 7 is a figure depicting an example of the data structure of a task model.
FIG. 8 is a figure depicting an example of the data structure of a step model.
FIG. 9 is a figure depicting an example of the data structure of a process model.
FIG. 10 is a figure depicting an example of the data structure of a step instance.
FIG. 11 is a figure depicting an example of an operation procedure performed by the process model creation system from acquisition of site data until provision of a process model.
FIG. 12 is a figure depicting an example of a procedure performed by the process model creation system to create a task flow.
FIG. 13 is a figure depicting an example of a procedure performed by the process model creation system to associate task-related information, and information about components used to generate a product with a task flow, and create a step instance.
FIG. 14 is a figure depicting an example of a procedure performed by the process model creation system to associate step instances with each other.
FIG. 15 is a figure depicting an example of creation of a task flow.
FIG. 16 is a figure depicting an example of association of task-related information with a task flow.
FIG. 17 is a figure depicting an example of creation of a step instance.
FIG. 18 is a figure depicting an example of association of step instances with each other.
FIG. 19 is a figure depicting an example of a process model that is created in a case that there are a plurality of step instances based on different data structures in a single step.
FIG. 20 is a diagram for explaining separation, and integration of tasks.
FIG. 21 is a figure depicting an example of an operation procedure from correction of a process model created by the process model creation system according to a second embodiment until registration of the corrected process model on the relation data model accumulating section.

### DETAILED DESCRIPTION

Embodiments are explained with reference to the figures. Note that embodiments explained below do not limit the invention according to claims, and also all of various elements explained in the embodiments, and combinations thereof are not necessarily essential for the solutions of the invention.

While a process model creation system 1 illustrated, and explained in the present embodiments is applied to an information collection system that collects site data that is generated at each manufacturing step, and/or a task in the manufacturing step at a manufacturing factory, the process model creation system 1 can similarly be applied to information collection systems that are used in every possible industry type such as the logistics industry, retail business, or service industry, for example, and are used for processes having a plurality of continuous tasks, and steps.

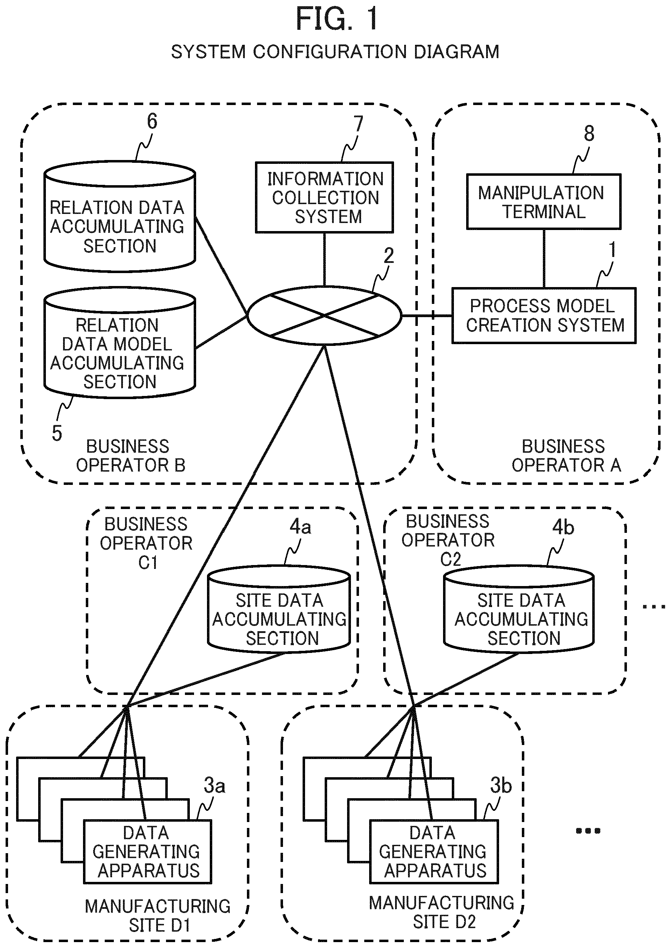

FIG. 1 is a block diagram depicting a configuration example of a data managing system to which the process model creation system 1 according to a first embodiment is applied.

In FIG. 1, the process model creation system 1 is connected to a network 2. In addition, the network 2 is connected with one or more data generating apparatuses 3, one or more site data accumulating sections 4, a relation data model accumulating section 5, and a relation data accumulating section 6. These process model creation system 1, data generating apparatuses 3, site data accumulating sections 4, relation data model accumulating section 5, and relation data accumulating section 6 are connected to an information collection system 7 via the network 2.

In addition, the process model creation system 1 is connected with a manipulation terminal 8 for manipulating the process model creation system 1.

The data generating apparatuses 3 are apparatuses that generate, as site data, task information related to implemented tasks, and task-related information related to the implemented tasks. For example, the data generating apparatuses 3 may be: barcode readers, PCs (Personal Computers), or servers that acquire work logs of operators; machines that perform machining of components, or assembly of finished products; or sensors that collect inspection information of RFIDs (Radio Frequency IDentifiers) attached to components, or finished products. The site data collected, or generated by the data generating apparatuses 3 is transmitted to the site data accumulating sections 4 via the network 2.

For example, the site data accumulating sections 4 are storage apparatuses such as servers, or memories, and accumulate the site data collected, or generated at the data generating apparatuses 3. That is, the site data accumulating sections 4 correspond to a site data accumulating apparatus in claims.

For example, the relation data model accumulating section 5 is a storage apparatus such as a server or a memory, and accumulates models that define what types of information are accumulated in the site data accumulating sections 4, and define data structures representing relations among the information. The models are called relation data models. The relation data models are models representing relationships between tasks, and task-related information in a process. A relationship data model of the whole process is a process model, a relationship data model of steps is a step model, and a relationship data model of tasks is a task model. The relationship data models represent what types of task are implemented in which order in a process, represent what types of task-related information correspond to the tasks, and so on. As mentioned below in detail, the relation data models are represented by connection relationships including tasks, and task-related information as nodes. The connection relationships of the nodes are called process data structures, for convenience. In other words, the relation data models define the process data structures. It is possible to change what types of site data are to be collected from the site data accumulating sections 4, by changing the relation data models defined in the relation data model accumulating section 5. The relation data model accumulating section 5 corresponds to a model accumulating apparatus in claims.

For example, the relation data accumulating section 6 is a storage apparatus such as a server or a memory, and accumulates relation data defined by relations between the relation data models in the relation data model accumulating section 5, and site data. That is, task information about implemented tasks, and task-related information are connected in the relation data in accordance with the relation data models.

The information collection system 7 collects information about implementation of tasks. The information about implementation of tasks is an implementation record related to the implementation of the tasks, for example. The implementation record related to the implementation of the tasks may include task-related information related to the tasks, along with task information related to the implementation of the tasks. For example, the task-related information is information about any one or more of objects, humans, facilities, procedures, and the like related to the implementation of the tasks.

On the basis of data structures defined in relation data models acquired from the relation data model accumulating section 5, and relation data acquired from the relation data accumulating section 6, the information collection system 7 acquires site data from the site data accumulating sections 4.

The business operator that owns the process model creation system 1 may be the same as the business operator that owns the information collection system 7. In addition, the business operators that owns the site data accumulating sections 4 may be the same as the business operator that own the information collection system 7, and the business operators that owns the process model creation system 1. In addition, the site data accumulating sections 4 may be located at manufacturing sites where the data generating apparatuses are, may be located at a location where the business operator that owns the information collection system 7 is, and at a location where the business operator that owns the process model creation system 1 is, or may be at all of the locations.

Next, main functionalities of the process model creation system 1 are explained.

The process model creation system 1 is realized on a computer having: a central processing unit (Central Processing Unit: CPU) that performs the overall control of the process model creation system 1; a storage apparatus (Read Only Memory: ROM) that stores various types of processing program for realizing functionalities of the process model creation system 1, and the like; non-transitory storage apparatuses such as a primary storage apparatus (Random Access Memory: RAM) or a hard disk drive (Hard Disk Drive: HDD) that store information temporarily; and the like. By the CPU executing the various types of processing program stored on the ROM, the following functionalities are realized. Some or all of the programs may be introduced from another apparatus via a non-transitory storage medium or a communication line, or may be stored in advance.

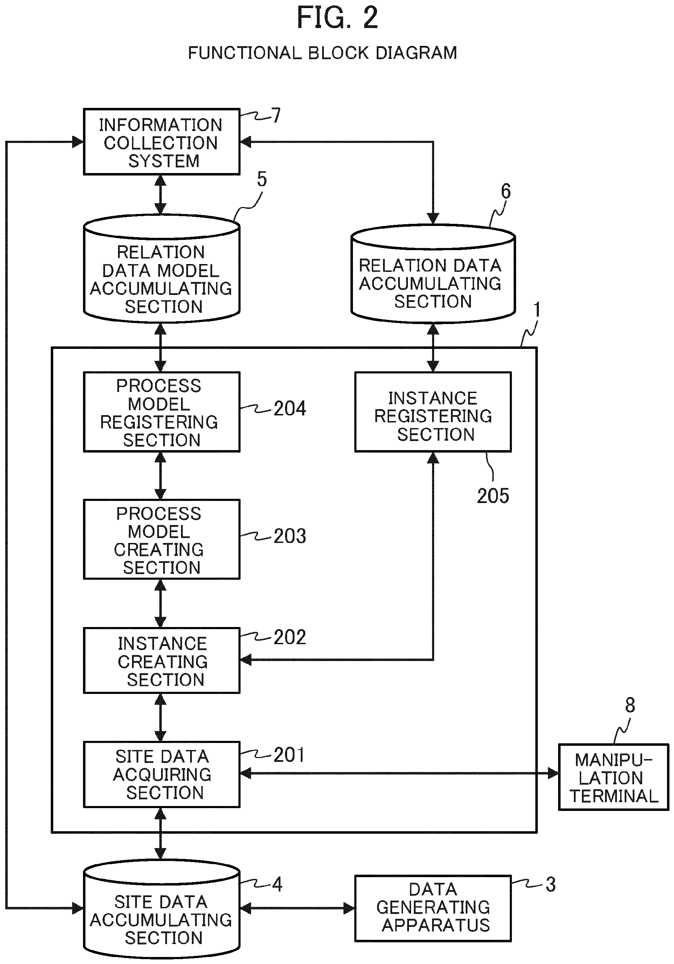

FIG. 2 is a block diagram for explaining functionalities of the process model creation system 1. As depicted in FIG. 2, the process model creation system 1 has a site data acquiring section 201, an instance creating section 202, a process model creating section 203, a process model registering section 204, and an instance registering section 205. In a case that these functional sections are realized by a single apparatus, the apparatus operates as a process model creating apparatus that corresponds to the process model creation system 1.

In addition, as mentioned before, the process model creation system 1 is connected to the site data accumulating sections 4, the relation data model accumulating section 5, and the relation data accumulating section 6 via the network 2.

In addition, as mentioned before, the process model creation system 1 is connected to the manipulation terminal 8. The manipulation terminal 8 provides a user with an environment where the user inputs predetermined information to the site data acquiring section 201. For example, the manipulation terminal 8 can give an instruction to create a process model, and an instruction to correct the process model, and output the created process model.

The process model creation system 1 creates step instances from site data, and creates a process model from the created step instances. Here, a process in the present embodiment represents a set of tasks from sequential implementation of one or more tasks on articles as raw materials until acquisition of articles as final products. The articles as the materials are given identifiers. The identifiers are called material identifiers before the tasks are implemented on the articles, and the identifiers are called product identifiers after implementation of the tasks. That is, the product identifiers in the upstream tasks are the material identifiers in the downstream tasks. In addition, there may be tasks in which identifiers remain the same before, and after implementation of the tasks (the material identifiers, and the product identifiers match), and there may be tasks in which identifiers change before, and after implementation of the tasks. In addition, a process of converting the identifiers can be included between tasks. As one example, a range of tasks in which the same identifiers are used continuously for articles is handled as one step. A step instance is relation data that defines a relation of site data for each step. Specifically, a step instance is data in which task information about tasks included in a step, and task-related information are connected in accordance with their relationship. In addition, as explained already, a process model is a relation data model which is a model representing relationships between tasks, and task-related information in a process, in other words, a relation data model defining a process data structure.

The site data acquiring section 201 acquires site data accumulated in the site data accumulating sections 4. The site data includes task information representing tasks implemented on articles, and task-related information (e.g. objects, humans, facilities, and procedures related to implementation of the tasks) related to the tasks.

The instance creating section 202 analyzes the site data acquired by the site data acquiring section 201, associates task-related information with corresponding task information, and creates step instances.

From the site data acquired by the site data acquiring section 201, and one or more step instances created at the instance creating section 202, the process model creating section 203 creates a process model which is a relation data model of the whole manufacturing process.

The process model registering section 204 registers, on the relation data model accumulating section 5, the process model created by the process model creating section 203.

The instance registering section 205 registers, as relation data, and on the relation data accumulating section 6, the step instances created by the instance creating section 202.

The information collection system 7 uses the process model created by the process model creation system 1, and registered on the relation data model accumulating section 5, and the step instances created by the process model creation system 1, and registered on the relation data accumulating section 6 to collect site data from the site data accumulating sections 4.

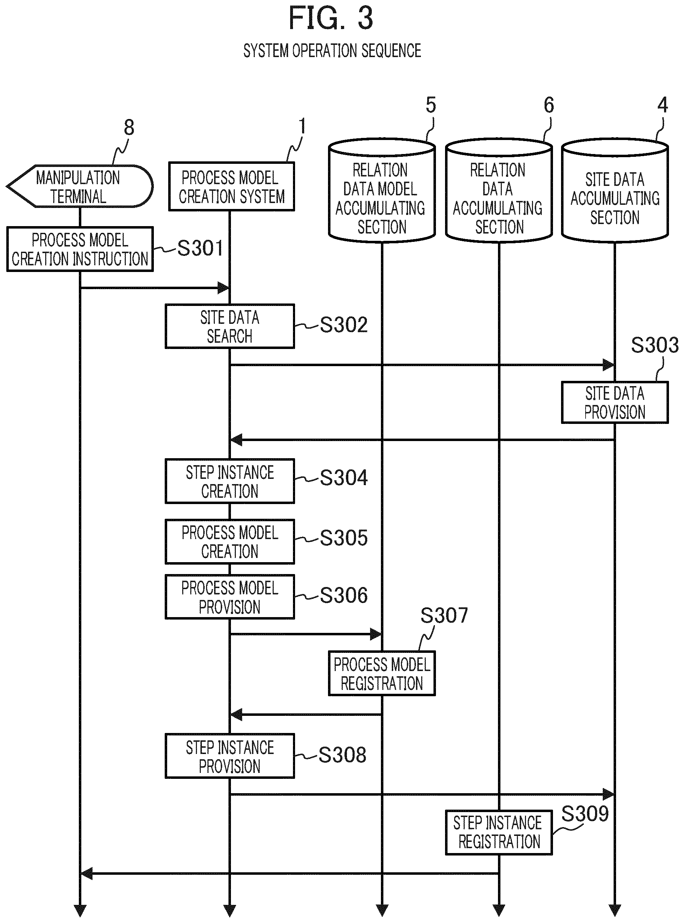

FIG. 3 is a figure depicting an example of an operation procedure performed by the process model creation system 1 in FIG. 1 from creation of a process model, and step instances from site data until registration of the process model, and the step instances on the relation data model accumulating section 5, and the relation data accumulating section 6.

A user who uses the process model creation system 1 uses the manipulation terminal 8 to give an instruction to the process model creation system 1 to create a process model (S301).

Next, the process model creation system 1 searches the site data accumulating sections 4 for corresponding site data (S302).

Next, the site data accumulating sections 4 provide site data to the process model creation system 1 (S303). Next, the process model creation system 1 creates step instances (S304).

Next, the process model creation system 1 creates a process model (S305), and provides the created process model to the relation data model accumulating section 5 (S306).

Next, the relation data model accumulating section 5 registers the process model provided from the process model creation system 1 (S307).

Next, the process model creation system 1 provides the created step instances to the relation data accumulating section 6 (S308) .

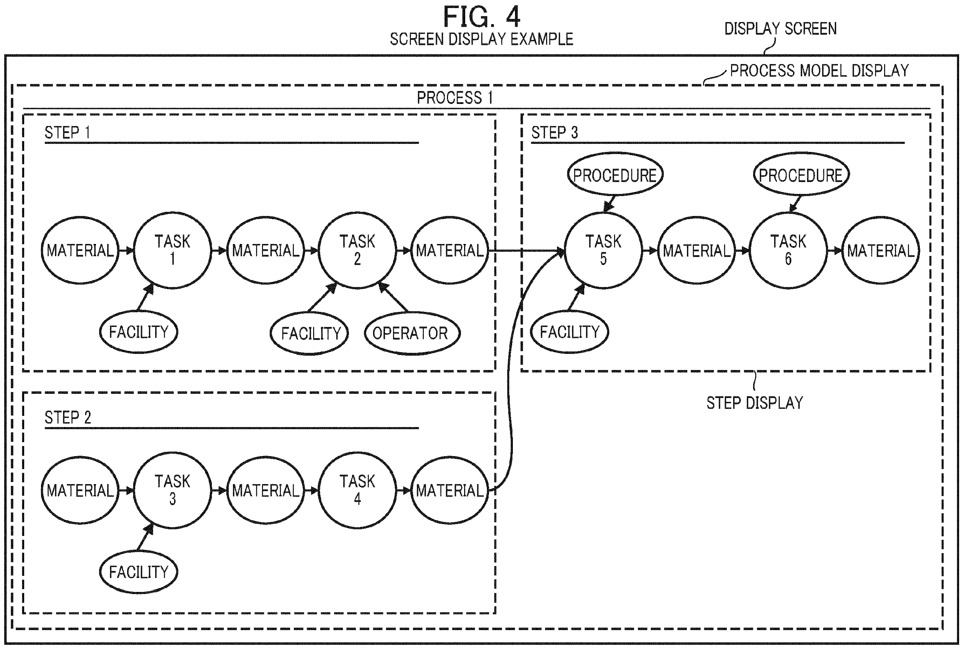

Next, the relation data accumulating section 6 registers the step instances provided from the process model creation system 1 (S309). Thereafter, the process model creation system 1 replies to the manipulation terminal 8 with a response. This response may be done by transmitting, and displaying the created process model, or may be done by transmitting, and displaying the registered step instances. FIG. 4 is a figure depicting a specific example of a screen display of the created process model. In FIG. 4, a process includes three steps, and each step includes two task nodes. Then, each task is connected, as nodes, task-related information (a material, a facility, an operator, a procedure, etc.), and the tasks are connected by material nodes. Note that in a case that the step instances are displayed, site data is displayed in association with each node.

Here, the process model creation system 1 may provide the step instances (S308) before the process model creation (S306), and may provide the process model after the step instances are provided (S308). As long as the step instances, and the process model are created by the process model creation system 1, and are provided to, and registered on the relation data model accumulating section 5, and the relation data accumulating section 6, S304 to S309 in FIG. 3 may be switched with one another.

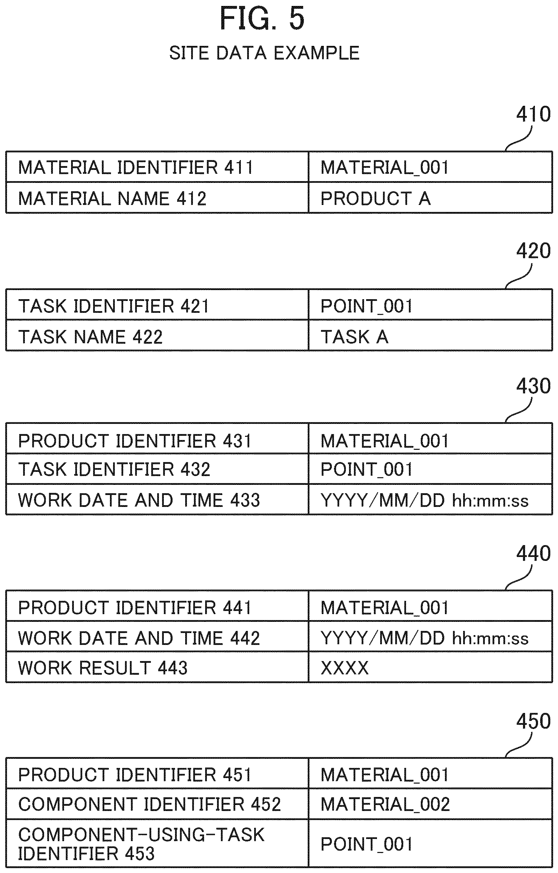

FIG. 5 is a figure depicting an example of information included in site data collected, or generated by a data generating apparatus 3. The site data includes material identification information 410, task identification information 420, task history information 430, task-related information history information 440, material-related information 450, and the like.

The material identification information 410 includes a material identifier 411 uniquely identifying a material, a material name 412 representing the name of the material, and the like. Here, a material generated as a result of performing a task on a material is called a product in some cases, and a material used to generate a product is called a component in some cases. When particular distinctions are not made between products, and components, they may be called materials collectively.

The task identification information 420 includes a task identifier 421 uniquely identifying a task, a task name 422 representing the name of the task, and the like.

The task history information 430 includes a product identifier 431 uniquely identifying a product, a task identifier 432 uniquely identifying the task, information representing the timing at which the task is performed, and the like. The information representing the timing at which the task is performed may be a date and time, or the like. In the example in FIG. 5, a work date and time 433 is used as information representing the timing at which the task is performed. In addition, the information representing the timing at which the task is performed may be a date and time of the start of the task, and a date and time of the end of the task. In addition, the task history information 430 may include information such as a scheduled work-completion date, for example. The task history information 430 is one example of task information related to an implemented task.

The task-related information history information 440 includes a product identifier 441 uniquely identifying a product, information representing the timing at which information related to a task is generated, history information about the information related to the task, and the like. The information representing the timing at which the information related to the task is generated may be a date and time, or the like. In the example in FIG. 5, a work date and time 442 is used as information representing the timing at which the information related to the task is generated. For example, the history information about the information related to the task may be information about an operator who performed the task, information about a facility used for performing the task, information about a work procedure for performing the task, or the like. In the example in FIG. 5, a work result 443 is used as the history information about the information related to the task. In addition, the task-related information history information 440 may include information such as a scheduled work-completion date, for example. The task-related information history information 440 is one example of task-related information related to an implemented task.

The material-related information 450 includes a product identifier 451 uniquely identifying a product, a component identifier 452 uniquely identifying a component used to manufacture the product, a component-using-task identifier 453 uniquely identifying a task in which the component is used, and the like. The material-related information 450 is one example of task-related information related to an implemented task.

In an example explained below, time information is used as information representing the timing at which a task included in site data is performed.

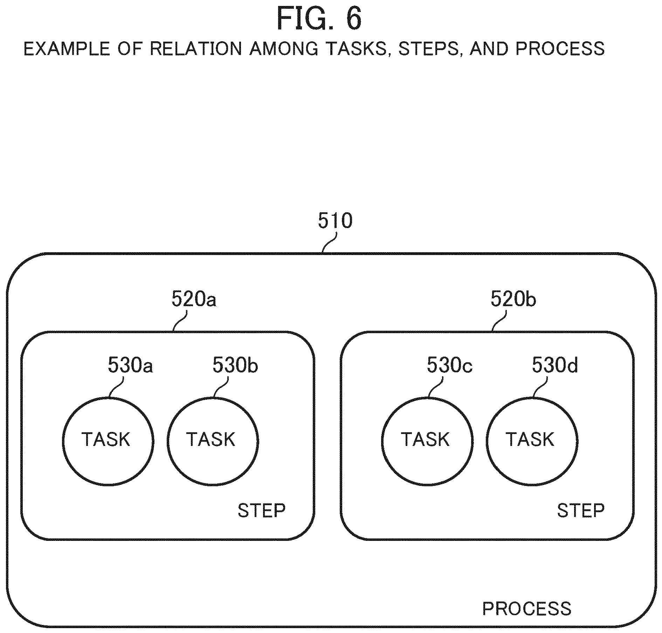

FIG. 6 is a figure depicting an example of relationships between a process, steps, and tasks in the present embodiment. The process includes one or more steps for generating materials to be included in one finished product, and each step includes one or more tasks performed on one materials. In the first embodiment, one task is defined as a task that is identified with the task identifier 421 included in the task identification information 420 in the site data, and uniquely identifying the task. In FIG. 6, a process 510 includes a step 520a, and a step 520b, for example. In addition, the step 520a includes a task 530a, and a task 530b, and the step 520b includes a task 530c, and a task 530d.

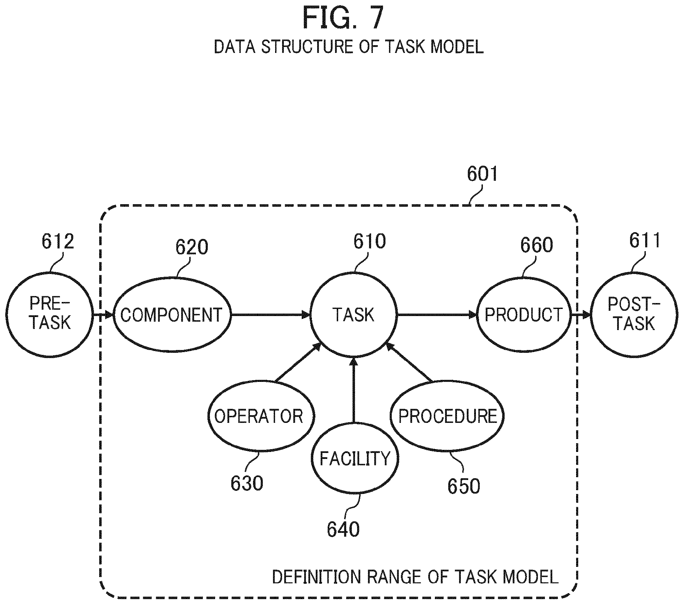

FIG. 7 is a figure depicting an example of the structure of definition information about a task model which is a relation data model of a task included in a manufacturing process. In FIG. 7, the task model associates site data generated from various apparatuses (data generating apparatuses 3) in each task with each other, to thereby represent what types of operator, machine, component, and the like are related to a predetermined task in what type of work procedure in what manner. For example, with a task node 610 associated with a task as its center, a task model 601 includes: a component node 620 associated with a material that is necessary when the task is executed; an operator node 630 associated with an operator who implements the task; a facility node 640 associated with a machine used for implementing the task; a procedure node 650 associated with a work procedure that defines an implementation procedure of the task; a product node 660 associated with a product generated as a result of the implementation of the task by using the component as the material; and the like.

The product associated with the product node 660 becomes a material (component) to be used in the post-task associated with a task node 611, and the material associated with the component node 620 is a product generated in the pre-task associated with a task node 612. That is, the material associated with the component node 620, and the material associated with the product node 660 have attributes whose meanings are of the same type, and in a case that particular distinctions are not made between the materials, they may be called a material node collectively. In addition, as mentioned before, the component (Material) node 620, the operator (Man) node 630, the facility (Machine) node 640, the procedure (Method) node 650, and the product (Material) node 660 are called 4M information, 4M nodes, or task-related information. The task-related information is not limited to the 4M information. For example, it may be 5M information including information about measure (Measurement) performed in the task, may be 1M to 3M information not including any one or more of them, or may include information about the quality of the product for which the task has been performed. In addition, it may include information about an environment (Environment) in which the task is performed, and information about a management state (Management).

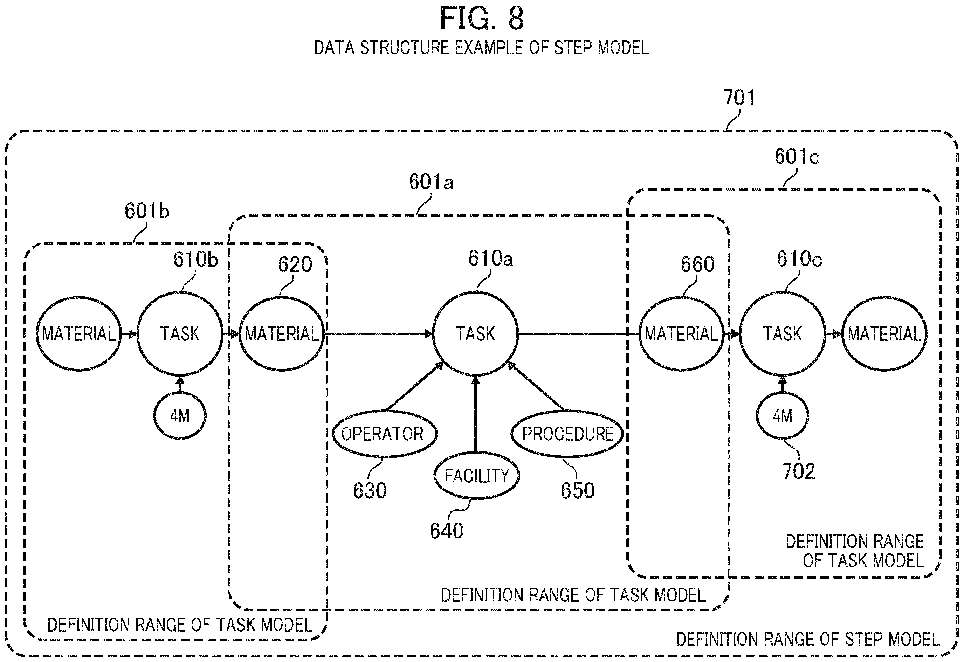

FIG. 8 is a figure depicting an example of the structure of definition information about a step model which is a relation data model of a step included in a manufacturing process. In FIG. 8, the step model represents relations between task models of tasks included in the step. The step model associates the task models of the tasks included in the step via material nodes. For example, in a step model 701, a task model in a task node 610a, and a task model in a task node 610b are associated with each other via a material node 620, and also the task model in the task node 610a, and a task model in a task node 610c are associated with each other via a material node 660. In addition, the task node 610a is associated with the operator node 630, the facility node 640, and the procedure node 650 which are task-related information. When particular distinctions are not made among the task-related information associated with the task node 610c, they may be treated as a 4M node 702 collectively.

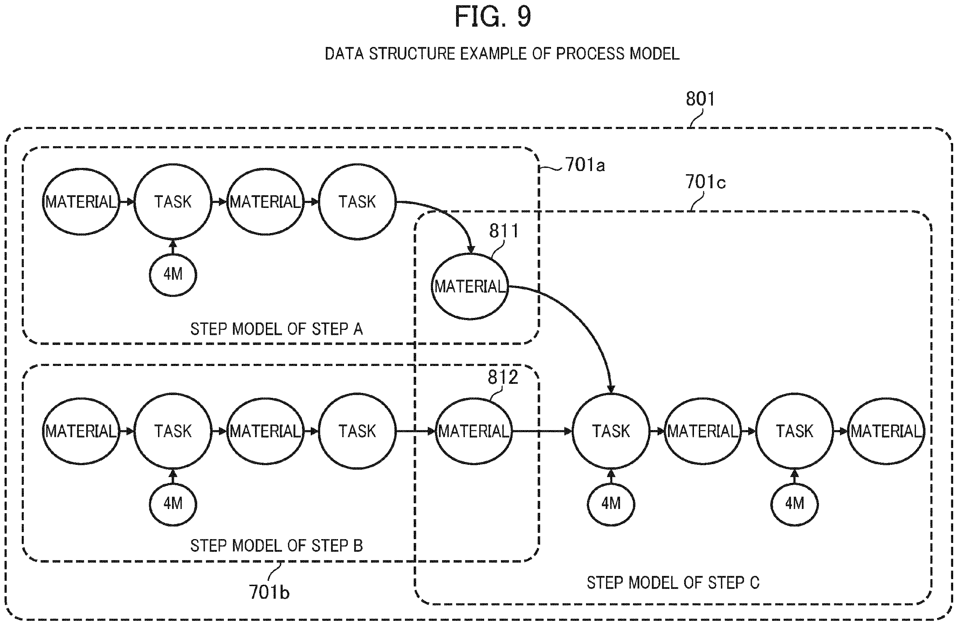

FIG. 9 is a figure depicting an example of the structure of a process model which is a relation data model of the whole manufacturing process. In FIG. 9, the process model represents relations between step models of steps included in the process. The manufacturing process depicted in a process model 801 includes a step A, a step B, and a step C, for example. The process model 801 includes a step model 701a for the step A, a step model 701b for the step B, and a step model 701c for the step C. A product associated with a product node 811 of the step model 701a becomes a component to be used at the post-step associated with the step model 701c. In addition, a product associated with a product node 812 of the step model 701b becomes a component to be used at the post-step associated with the step model 701c. Thereby, the step model 701a, the step model 701b, and the step model 701c are associated with each other.

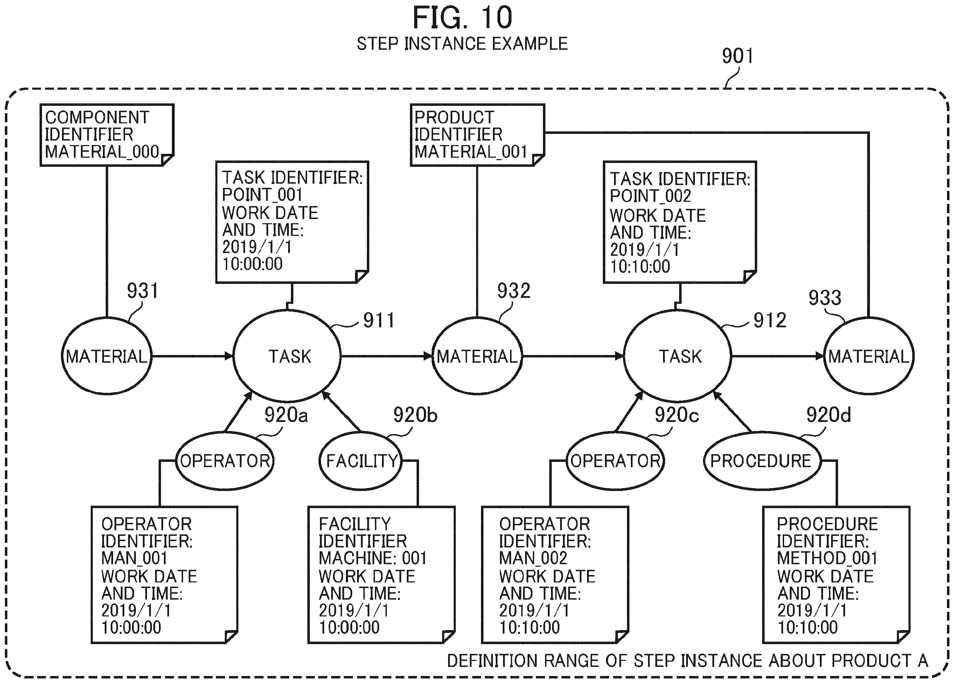

FIG. 10 is a figure depicting one example of the data structure about relation data, or a step instance about one material on which a task has been performed. The step instance may have a structure in which each node in a task model about each task performed for a product stores site data, or may store information about keys for searching the site data accumulating sections for site data. For example, a step instance 901 is a step instance about a product A, has a task node 911, and a task node 912 as task nodes, and each task node is associated with a 4M node 920. In addition, a product node 932 associated with the task node 911 is a component node associated with the task node 912, and the task node 911, and the task node 912 are associated with each other via a material node 932. The task nodes store task identifier information uniquely representing tasks performed about the product A, information representing the timings at which the tasks are performed, and the like. Operator nodes store operator identifier information uniquely representing operators who implement the tasks, and the like. Facility nodes store facility identifier information uniquely representing facilities used for implementing the tasks, and the like. Procedure nodes store procedure identifier information uniquely representing implementation procedures of the tasks, and the like. A component node 931 associated with a component used in the first task performed for the product A stores component identifier information uniquely representing a component used to generate the product A, and the like. Other material nodes store product identifier information uniquely representing the product A, and the like.

The information collection system 7 can search for task-related information associated with the product by using the process model, and the relation data.

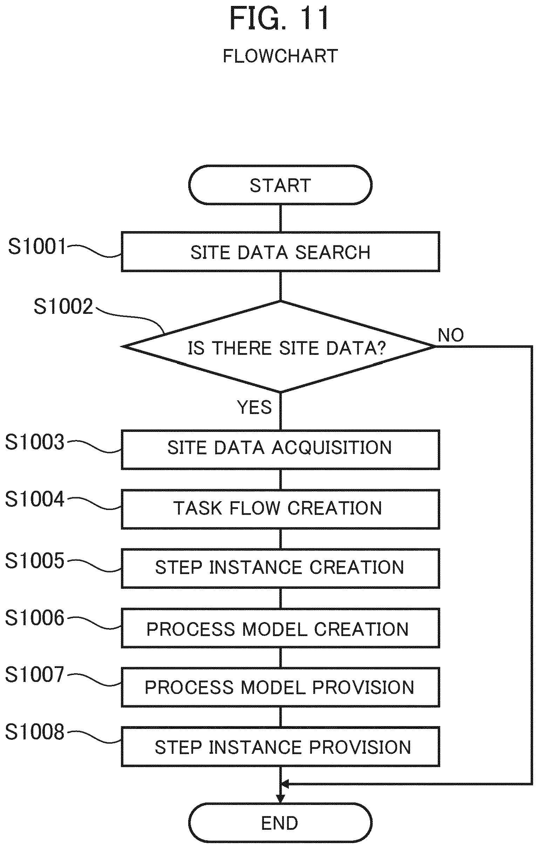

FIG. 11 is a figure depicting an example of a procedure performed by the process model creation system 1 to create step instances, register the step instances, create a process model, and register the process model. The procedure depicted in FIG. 11 is equivalent to S302, S304 to S306, and S308 in the operation procedure of the process model creation system 1 depicted in FIG. 3.

Via the manipulation terminal 8, the user selects site data to treat as the target for which a process model is created. For example, the user selects, or inputs target-period information, or the like.

On the basis of the condition input by the user via the manipulation terminal 8, the site data acquiring section 201 searches for site data accumulated in the site data accumulating sections 4 (S1001). In a case that there is site data corresponding to the condition in the site data accumulated in the site data accumulating sections 4 (in the case of Yes at S1002), the site data acquiring section 201 acquires the corresponding site data (S1003). On the other hand, in a case that there is not site data corresponding to the condition (in the case of No at S1002), the site data acquiring section 201 ends the process model creation.

Next, for each product, the instance creating section 202 creates a task flow representing a flow of tasks performed for the product on the basis of the acquired site data (S1004). Next, the instance creating section 202 creates step instances for each product (S1005).

Next, the process model creating section 203 associates the created step instances with each other, and creates a process model (S1006).

Next, the process model registering section 204 registers the create process model as a relation data model on the relation data model accumulating section 5 (S1007).

Next, the instance registering section 205 registers the created step instances as relation data on the relation data accumulating section 6 (S1008).

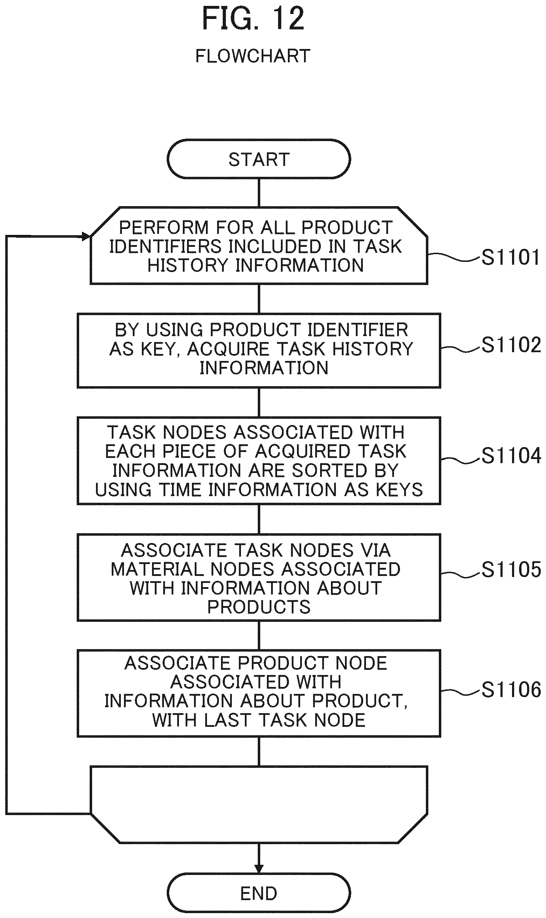

FIG. 12 is a figure depicting an example of a procedure of creation of a task flow at S1004 in FIG. 11. Creation of task flows is performed for the entire product identifier information uniquely identifying products included in the task history information 430 (S1101). First, the instance creating section 202 searches the task history information 430 by using product identifiers as keys, and searches for information about tasks performed for each product (S1102). Next, task nodes associated with tasks are sorted by using information about times at which the tasks are performed as keys (S1104), and the task nodes are associated with each other via material nodes associated with products (S1105). In addition, the task nodes associated with tasks that are performed for the products last are associated with product nodes associated with the products (S1106), to thereby create task flows.

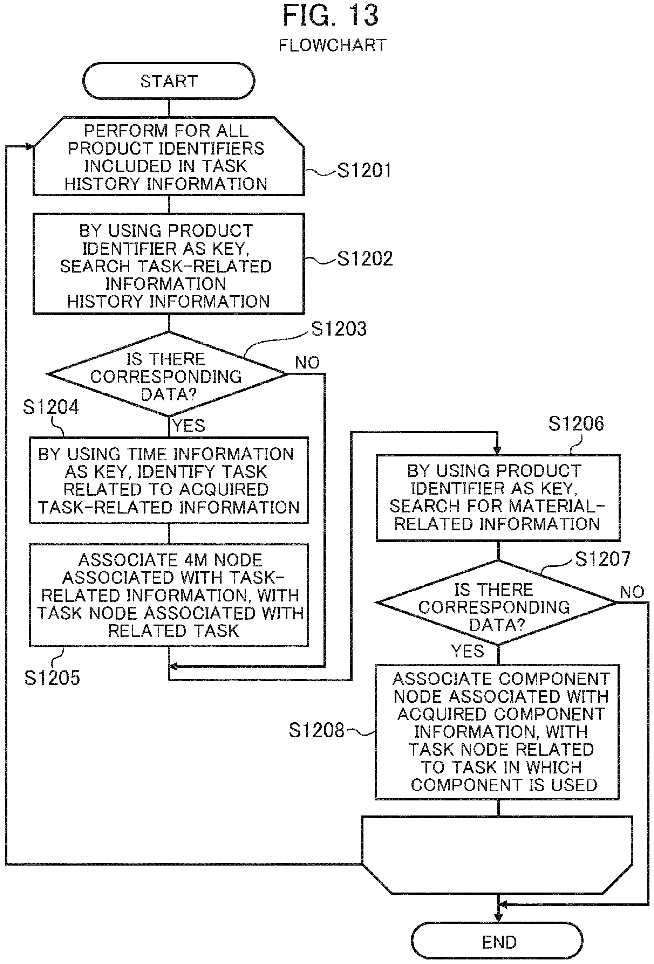

FIG. 13 is a figure depicting an example of a procedure performed at S1005 in FIG. 11 to associate information related to tasks, and information about components used to generate products are associated with the task flows, and create a step instance. Creation of step instances is performed for the entire product identifier information uniquely identifying products included in the task history information 430 (S1201). The instance creating section 202 searches the task-related information history information 440 by using product identifiers as keys, and searches for information related to tasks performed for products (S1202). In a case that there is information corresponding to the search (in the case of Yes at S1203), time information about the acquired task-related information is used to identify a task node with which a task associated with the task-related information is associated in task nodes included in the task flow (S1204), and 4M nodes associated with the task-related information are associated with the task node (S1205). On the other hand, in a case that there is no information corresponding to the search (in the case of No at S1203), association of the related information is ended. Next, the instance creating section 202 searches the material-related information 450 by using product identifiers as keys, and searches for information about components used to generate products, and information about tasks in which the components are used (S1206). In a case that there is information corresponding to the search (in the case of Yes at S1207), component nodes associated with the acquired information about the components are associated with task nodes associated with the tasks in which the components are used (S1208). Thereby, step instances of products are created. On the other hand, in a case that there is no information corresponding to the search (in the case of No at S1207), creation of a step instance ends. In a manufacturing process, generally, product identifiers are not changed in a step, and so the data structure of a step instance having information about a flow of tasks performed on materials represented by the same product identifier can be regarded as one of step models.

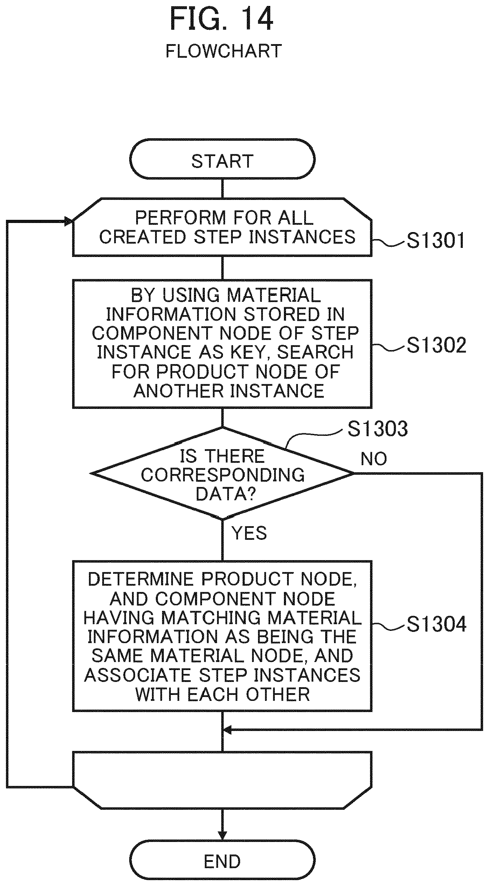

FIG. 14 is a figure depicting an example of a procedure of creating the process model at S1006 in FIG. 11. Creation of the process model is performed on all the step instances created by the instance creating section 202 (S1301). By using, as a key, a component identifier of a component associated with a component node in a step instance of each product, the process model creating section 203 searches for information about a product associated with a product node in a step instance of another product (S1302). In case that there is information corresponding to the search (in the case of Yes at S1303), the process model creating section 203 treats the data structure of the step instance as a step model, and determines that the product node, and the component node are the same material node, and thereby associates the step models with each other (S1304). On the other hand, in a case that there is no information corresponding to the search (in the case of No at S1303), association of step instances ends.

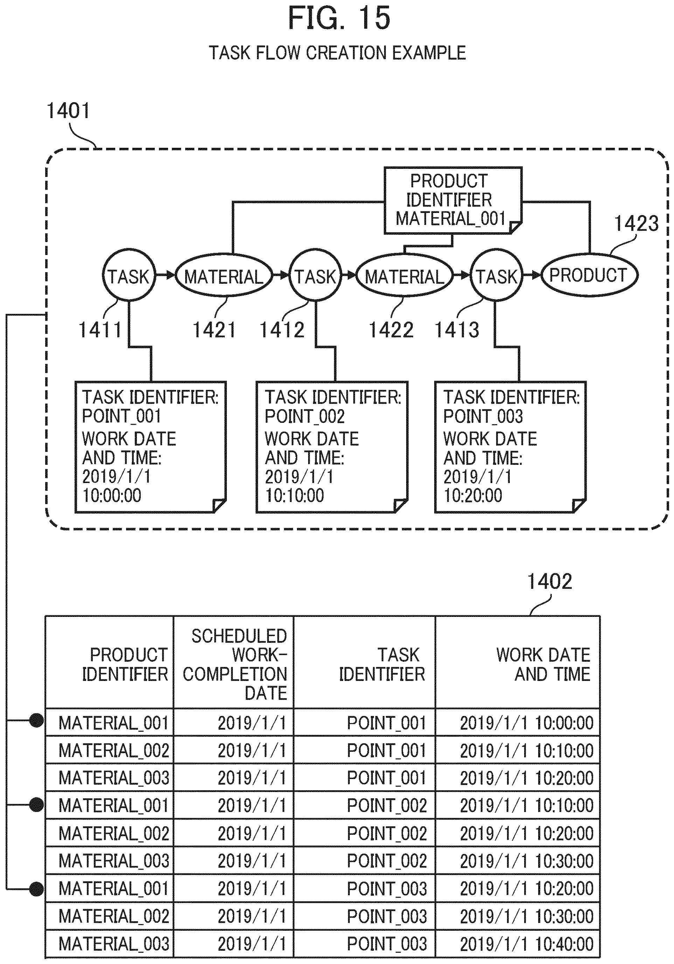

FIG. 15 is a figure depicting a specific example of creation of a task flow 1401. Specifically, the instance creating section 202 classifies pieces of information in task history information 1402 into information of each product, by using product identifiers as keys. The classified pieces of the task history information for individual products are sorted in chronological order of work dates and times, and the order of task orders performed for the products is acquired. A task node 1411, a task node 1412, and a task node 1413 associated with tasks are sorted in the order of tasks, and data generated in the corresponding task for the product is stored in each task node. Next, adjacent task nodes are associated with each other via a material node 1421, and a material node 1422, and a product identifier is stored in each material node as information to identify a material. In addition, the task node 1413 associated with the last task in the order of tasks is associated with a product node 1423 associated with a material as a product, and a product identifier is stored in the product node as information to identify a material, to thereby create the task flow 1401. The instance creating section 202 creates a task flow in this manner.

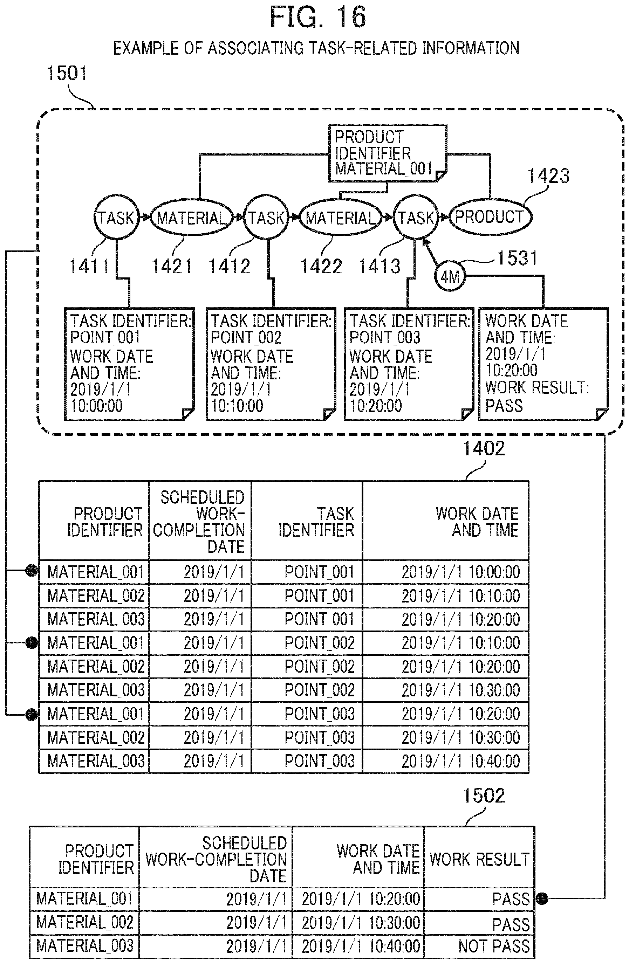

FIG. 16 is a figure depicting a specific example of association of task-related information included in task-related information history information 1502 with the task flow 1401. Specifically, by using product identifiers as keys, the instance creating section 202 extracts task-related information about a product associated with the product node 1423 in the task flow 1401 from the task-related information history information 1502. A work date and time of the extracted task-related information, and work dates and times at which tasks stored in the task node 1411, the task node 1412, and the task node 1413 included in the task flow 1401 are performed are compared, and the task node 1413 associated with a task related to the extracted task-related information is determined. A task-related information node (4M node) 1531 associated with the extracted task-related information, and the task node 1413 are associated with each other. The instance creating section 202 associates task-related information nodes with a task flow in this manner.

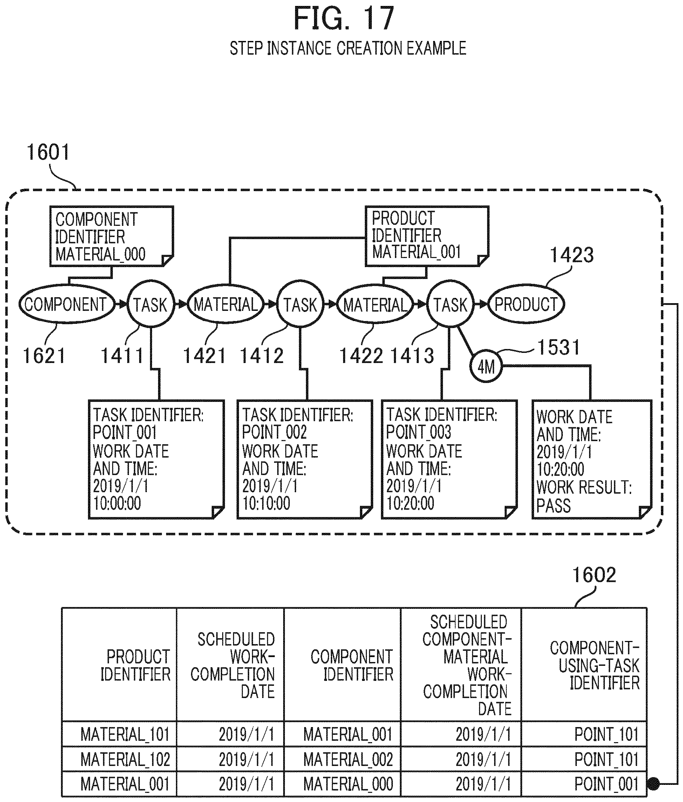

FIG. 17 is a figure depicting a specific example of creation of a step instance. Specifically, the instance creating section 202 newly creates a component node 1621 storing information about a component used to generate a material associated with the task flow 1401, and associates it with the task node 1411 associated with the task in which the component is used, to thereby create a step instance 1601. The instance creating section 202 creates a step instance in this manner.

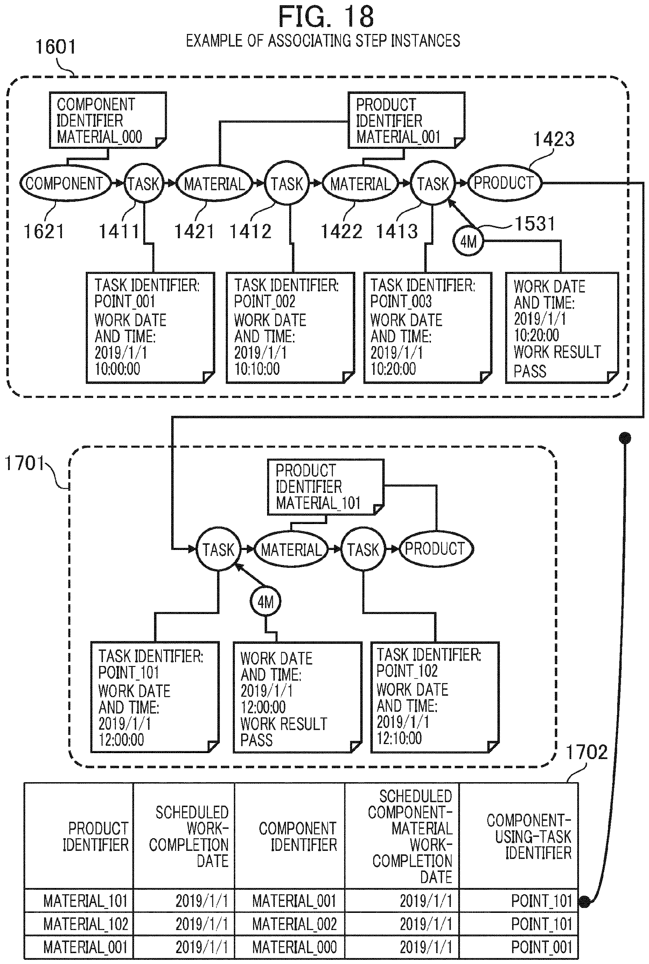

FIG. 18 is a figure depicting an example of association of step instances with each other. Specifically, when a component used to generate a product associated with a step instance 1701 is the product associated with the step instance 1601, the process model creating section 203 determines that the product node 1423 of the step instance 1601 is a component node of the step instance 1701, to thereby associate the step instance 1601, and the step instance 1701 with each other. The process model creating section 203 associates step instances with each other in this manner. If all the step instances in the process are associated, the result of the association becomes one of instances representing how the whole process is implemented. The instance of implementation of the whole process includes site data, and a data structure representing relationships between tasks, and task-related information in the process. Accordingly, by removing the site data (task information, and task-related information) from the instance of the implementation of the whole process, a process model representing a process data structure is obtained.

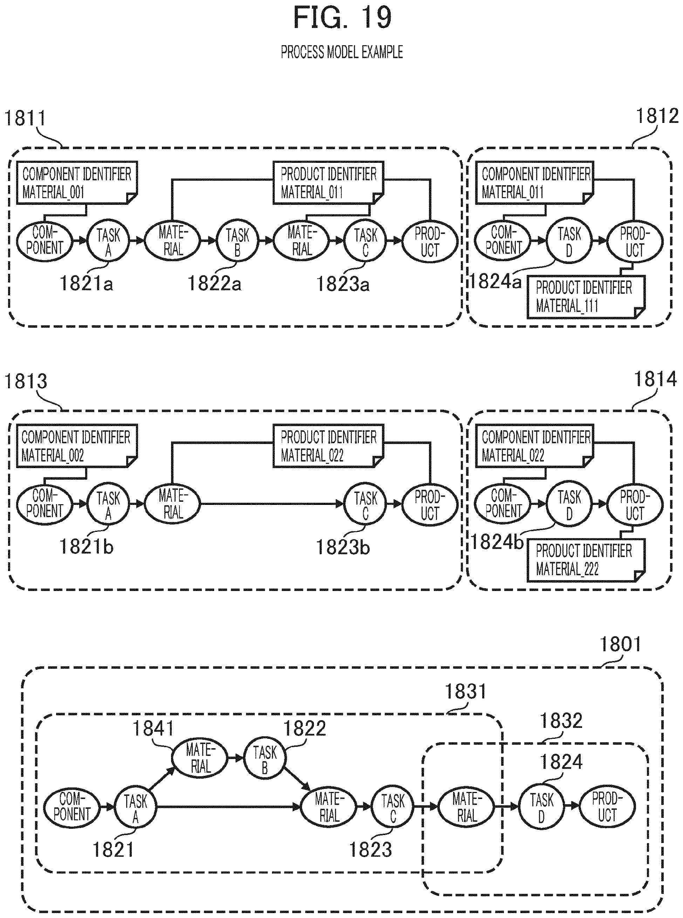

FIG. 19 is a figure for explaining a process model created by the process model creation system 1 in a case that there are a plurality of step instances which are the same in that they have the same task nodes A, and C, but have different data structures by having or not having B. Note that in this figure, 4M nodes other than component materials are omitted for simplification of explanation. For example, a process model 1801 is created by treating relation data models of a step instance 1811, a step instance 1812, a step instance 1813, and a step instance 1814 as step models, and associating the step models with each other.

Here, the step instance 1811 has a task node 1821a associated with a task A, a task node 1822a associated with a task B, and a task node 1823a associated with a task C. In addition, in the step instance 1812, a product associated with a product node of the step instance 1811 is used as a component in a task D.

Similarly, the step instance 1813 has a task node 1821b associated with the task A, and a task node 1823b associated with the task C. In addition, in the step instance 1814, a product associated with a product node of the step instance 1813 is used as a component in the task D.

In the process model 1801 depicted in FIG. 19, in a step model 1831 including the task A, the task B, and the task C in step models included in the process model 1801, the data structure has a branch to a plurality of material nodes from one task node. Specifically, there is a branch downstream of the task A into a path that is connected to the task C via the task B, and a path directly connected to the task C. If a plurality of step instances incorporating different tasks are created in a predetermined segment in a process in this manner, it is preferred to create a process model that satisfies each of the plurality of step instances. Note that it is not necessary to satisfy all of the step instances incorporating the different tasks. For example, a threshold may be set about the ratio between the number of products for which the task B is performed, and the number of products for which other tasks are performed, and, in a case that the ratio of products for which the task B is performed is equal to or lower than the threshold, a task node 1822 associated with the task B, and a material node 1841 associated with a component used in the task B may be omitted. If a plurality of step instances incorporating different tasks are created for a predetermined segment in a process in this manner, it is possible to prevent excessive complexity of a process model by comparing the frequency of appearance for each pattern of tasks incorporated in the plurality of step instances, and selecting step instances to be used for creation of a process model on the basis of the frequencies of appearance.

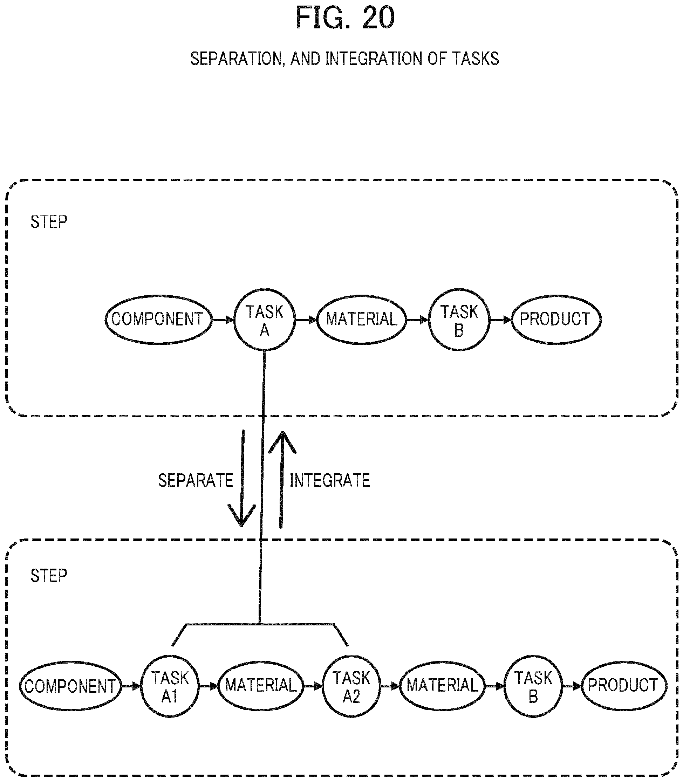

Hereinafter, in the following case explained, a process model created by the process model creation system 1 is corrected. In a second embodiment explained below, each task identified with a task identifier 421 may be treated as one task, one or more tasks identified with task identifiers 421 may be corrected as being collectively one task, or two or more steps may be corrected as being collectively one step. In addition, two or more tasks performed on one material in one step may be corrected by being divided into two or more steps. In addition, as a difference from the functionalities represented by FIG. 2, which is a functional block diagram of the process model creation system 1 according to the first embodiment, a functionality of the process model creation system 1 according to the second embodiment explained below may be able to provide a process model created by the process model creating section 203 to the manipulation terminal 8. FIG. 20 is a diagram for explaining separation, and integration of tasks. FIG. 20 depicts separation of the task A into a task A1, and a task A2 in a state that a step includes the task A, and the task B. Similarly, it is also possible to integrate the task A1, and the task A2 into the task A in a state that the task A1, the task A2, and the task B are included. While FIG. 20 depicts separation, and integration of tasks, steps also can be separated, and integrated.

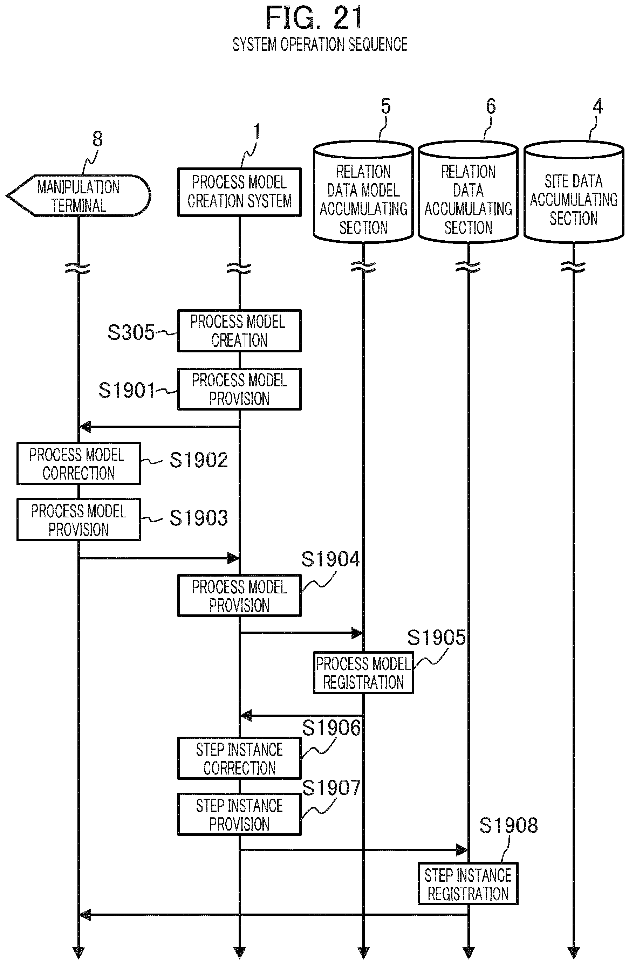

FIG. 21 is a figure depicting an example of an operation procedure performed by the process model creation system 1 according to the second embodiment to correct a created process model by using the manipulation terminal 8. With reference to FIG. 21, the operation procedure of a process model creation S305, and the subsequent steps performed by the process model creating section 203, which are differences from the first embodiment, are explained. After creating the process model at the process model creating section 203 (S305), the process model creation system 1 provides the created process model to the manipulation terminal 8 (S1901).

Next, the user of the manipulation terminal 8 may correct the process model provided from the process model creating section 203 (S1902). For example, correction may be performed for the data structure of a process model displayed on a screen by performing manipulation of removing nodes being displayed, or integrating one or more nodes.

Next, the user of the manipulation terminal 8 provides the corrected process model to the process model creating section 203 (S1903). Next, the process model registering section 204 provides the process model to the relation data model accumulating section 5 (S1904) Then, the relation data model accumulating section 5 registers the process model provided from the process model registering section 204 (S1905).

Next, the instance creating section 202 corrects the step instances in accordance with the data structure of the corrected process model (S1906), and thereafter the instance registering section 205 provides the step instances to the relation data accumulating section 6 (S1907). Next, the relation data accumulating section 6 registers the step instances provided from the instance registering section 205 (S1908). Thereafter, the process model creation system 1 replies to the manipulation terminal 8 with a response. This response may be done by transmitting, and displaying the corrected process model, or may be done by transmitting, and displaying the registered step instances. Specific displays are similar to those in the first embodiment, and so explanations thereof are omitted.

As explained above, according to the embodiments mentioned above, the process model creation system 1 can create a process model representing the relation of site data generated at a manufacturing site, and tasks included in a process including a plurality of steps, on the basis of the site data. Accordingly, the speed of site-data collection, and analysis can be increased.

Note that while a manufacturing process model is created from site data generated in manufacturing processes at a manufacturing site in examples of the embodiments mentioned above, the process model creation system 1 can be applied not only to manufacturing sites, but also to any type of business that includes a plurality of steps, and generates site data. For example, in the logistics industry, or transport industry, there are a plurality of steps included in transport processes including receipt, sorting, storage, packaging, and delivery of transported goods, and creation of a transport process model from site data related to the transport processes can be performed similarly to creation of a process model at a manufacturing site.

The present invention is not limited to the embodiments described above, but includes various modification examples. For example, the embodiments described above are explained in detail in order to explain the present invention in an easy-to-understand manner, and embodiments of the present invention are not necessarily limited to those including all the configurations explained. In addition, some of the configurations of an embodiment can be replaced with configurations of another embodiment, and also configurations of an embodiment can be added to the configurations of another embodiment. In addition, another configuration can be added to some of the configurations of each embodiment, some of the configurations of each embodiment can be removed, and/or some of the configurations of each embodiment can be replaced with another configuration. In addition, each configuration, functionality, processing section, or the like that is described above may be partially or entirely realized by hardware by designing them on an integrated circuit, and so on, for example.

## Claims

1. A process model creation system comprising:
a site data acquiring section that acquires, as site data, task information related to one or more tasks implemented for a process including the tasks, and task-related information related to the implemented tasks;
an instance creating section that creates a step instance by associating the task-related information with the corresponding task information; and
a process model creating section that creates, from one or more step instances, a process model which is a model representing a relationship between the one or more tasks in the process.

2. The process model creation system according to claim 1, wherein
the task information, and the task-related information have time information, and
the instance creating section uses the time information to associate the task information, and the task-related information.

3. The process model creation system according to claim 1, wherein
the task information, and the task-related information have a material identifier uniquely representing a material, and
the instance creating section uses the material identifier to associate the task information, and the task-related information.

4. The process model creation system according to claim 1, wherein, on a basis of time information included in the task information, the instance creating section associates a plurality of tasks included in one step.

5. The process model creation system according to claim 3, wherein on a basis of the material identifier, the process model creating section connects a plurality of step instances, and creates the process model from the connected plurality of step instances.

6. The process model creation system according to claim 3, wherein
the task-related information further has a product identifier that uniquely represents a product generated in the tasks, and
the instance creating section uses the material identifier, and the product identifier to associate the task information, and the task-related information.

7. The process model creation system according to claim 6, wherein when the product identifier in a first step instance is the same as the material identifier in a second step instance, the process model creating section connects the second step instance downstream of the first step instance.

8. The process model creation system according to claim 5, wherein if a plurality of step instances incorporating different tasks are created for a predetermined segment in the process, the process model creating section creates a process model that satisfies each of the plurality of step instances.

9. The process model creation system according to claim 5, wherein if a plurality of step instances incorporating different tasks are created for a predetermined segment in the process, the process model creating section compares a frequency of appearance of each pattern of a task incorporated in the plurality of step instances, and selects a step instance to be used for creation of the process model on a basis of the frequency of appearance.

10. The process model creation system according to claim 5, wherein in a case that the process model creating section receives a correction request to correct a created process model, the process model creating section corrects the process model on a basis of the correction request.

11. The process model creation system according to claim 2, wherein the instance creating section associates task-related information having time information corresponding to times at which the tasks are performed, with task information corresponding to the task.

12. The process model creation system according to claim 3, wherein the instance creating section manages the task information for each task identified with predetermined identification information, and creates the step instance treating, as one step, a range in which the same material identifier is used.

13. A process model creation system comprising:
a site data accumulating apparatus that accumulates, as site data, task information related to one or more tasks implemented for a process including the tasks, and task-related information related to the implemented tasks;
a process model creating apparatus that acquires the site data from the site data accumulating apparatus, creates a step instance by associating the task-related information with the corresponding task information, and creates, from one or more step instances, a process model which is a model representing a relationship between the one or more tasks in the process; and
a model accumulating apparatus that accumulates the process model created by the process model creating apparatus.

14. A process model creation method comprising:
a site data acquisition step of acquiring, as site data, task information related to one or more tasks implemented for a process including the tasks, and task-related information related to the implemented tasks;
an instance creation step of creating a step instance by associating the task-related information with the corresponding task information; and
a process model creation step of creating, from one or more step instances, a process model which is a model representing a relationship between the one or more tasks in the process.
